# EUROPÄISCHE PATENTSCHRIFT

(11) **EP 2 477 891 B1**
(45) Veröffentlichungstag und Bekanntmachung des Hinweises auf die Patenterteilung: **06.11.2019**
(21) Anmeldenummer: 10760957.0
(22) Anmeldetag: 15.09.2010
(51) Int. Cl.: B64C 1/06, B64D 11/00

(54) **VERKLEIDUNGSVORRICHTUNG FÜR EINEN INNENRAUM EINES FLUGZEUGS UND EIN VERFAHREN ZUM VERKLEIDEN EINES INNENRAUMS EINES FLUGZEUGS**
COVERING DEVICE FOR AN INTERIOR OF AN AIRCRAFT AND A METHOD FOR COVERING AN INTERIOR OF AN AIRCRAFT
DISPOSITIF D'HABILLAGE D'UNE CABINE D'UN AVION ET PROCÉDÉ D'HABILLAGE D'UNE CABINE D'UN AVION

(30) Priorität: 15.09.2009 DE 102009041597; 15.09.2009 US 242614 P
(43) Veröffentlichungstag der Anmeldung: 25.07.2012
(73) Patentinhaber: Airbus Operations GmbH, 21129 Hamburg (DE)
(72) Erfinder: WUGGETZER, Ingo, 82237 Wörthsee (DE); LIST, Stefan, 20354 Hamburg (DE); TSCHECHNE, Nicolas, 20251 Hamburg (DE); MAYER, Tobias, 20146 Hamburg (DE)
(74) Vertreter: LKGLOBAL Lorenz & Kopf PartG mbB Patentanwälte
(86) Internationale Anmeldenummer: PCT/EP2010/063573
(87) Internationale Veröffentlichungsnummer: WO 2011/032996

(56) Entgegenhaltungen:
- EP-A1- 1 452 397
- DE-A1- 19 537 081
- DE-A1-102005 040 571
- DE-A1-102007 061 423
- DE-C- 715 265
- US-A- 2 496 910
- US-A1- 2006 237 585

## Beschreibung

### BEZUG AUF ZUGEHÖRIGE ANMELDUNGEN

Die vorliegende Anmeldung beansprucht die Priorität der US Provisional Patentanmeldung Nr. 61/242,614, eingereicht am 15. September 2009 und der deutschen Patentanmeldung Nr. 10 2009 041 597.1, eingereicht am 15. September 2009.

### TECHNISCHES GEBIET

Die Erfindung betrifft eine Verkleidungsvorrichtung für einen Innenraum eines Flugzeugs, ein Verfahren zum Verkleiden eines Innenraums eines Flugzeugs sowie ein Flugzeug mit mindestens einem Innenraum und mindestens einer erfindungsgemäßen Verkleidungsvorrichtung.

### HINTERGRUND DER ERFINDUNG

Zurzeit werden für die Verkleidung insbesondere der Decken von Innenräumen von Flugzeugen einzelne Deckenpaneele verwendet, die an Fixierungspunkten auf Über-Kopf-Staufächern oder darüber angeordneten Strukturbereichen befestigt werden. Zur Verkleidung einer Decke sind eine Vielzahl von separaten Deckenpaneelen notwendig, deren Fertigung aufgrund des geforderten geringen Gewichts aufwändig und kostenintensiv ist. Ebenso ist die individuelle Ausrichtung der einzelnen Deckenpaneele von entscheidender Bedeutung, wofür im Stand der Technik häufig spezielle Systeme entwickelt und verwendet werden. Die Komplexität und der Aufwand zur Herstellung einer herkömmlichen Deckenverkleidung eines Flugzeugs sind demnach beträchtlich.

In DE 10 2007 011 627 A1 und WO 08 090 084 A2 wird eine Innenverkleidung für ein Luftfahrzeug gezeigt, bei der Verkleidungsplatten im Wesentlichen horizontal oder in etwa senkrecht auf einem mit Profilen gebildeten Lininggerüst zur Anbindung an eine Rumpfzelle befestigt sind.

In DE 101 27 879 A1, EP 1 557 355 B1 und US 6 547 184 wird eine Passagierkabine eines Verkehrsflugzeuges gezeigt, die mit Ausstattungsteilen und Verkleidungsteilen, etwa einzelnen Seitenverkleidungsteilen und einzelnen Deckenverkleidungspaneelen, eingerichtet ist.

Aus EP 1 452 397 A1 ist eine Fahrzeugdeckenstruktur mit einzelnen Deckenpaneelen bekannt, wobei die Deckenpaneele einen Rahmen aufweisen, auf den ein dehnbares Gewebe gespannt ist, wobei im Inneren des Rahmens ein Beleuchtungskörper angeordnet ist. Durch die Notwendigkeit, einzelne Rahmen anzufertigen und diese korrekt in dem Innenraum des Flugzeugs zu positionieren ergehen die oben genannten Nachteilen.

DE 10 2005 040 571 A1 offenbart eine Vorrichtung zum Kühlen, Heizen oder Belüften eines Innenraums mit einer flächigen und abschnittsweise luftdurchlässigen Gewebebahn als Luftauslass.

Weiterhin werden im Stand der Technik ebenfalls verbreitet Beleuchtungseinrichtungen an jedem einzelnen Deckenpaneel angeordnet, so dass für individuelle Modifikationen des Beleuchtungskonzepts durch einen Flugzeugbetreiber im Rahmen der Herstellung eines standardisierten Designs ausgehend von einer Serienfertigung des Flugzeugs kaum eine kostengünstige Lösung realisiert werden kann.

### ZUSAMMENFASSUNG DER ERFINDUNG

Nach alledem könnte als Aufgabe der Erfindung angesehen werden, eine Verkleidungsvorrichtung für einen Innenraum eines Flugzeugs vorzuschlagen, bei dem keine Notwendigkeit besteht, einzelne separate Deckenpaneele zu fertigen und präzise in vorgegebenen Installationspositionen an einer Kabinendecke oder dergleichen eines Flugzeugs befestigen zu müssen. Gleichermaßen kann als Aufgabe der Erfindung angesehen werden, eine derartige Verkleidungsvorrichtung vorzuschlagen, die möglichst kostengünstig zu fertigen, ein geringes Gewicht aufweist und mit geringem Aufwand schnell und zuverlässig in dem Innenraum zu installieren ist.

Die Aufgabe wird gelöst durch eine Verkleidungsvorrichtung mit den Merkmalen des unabhängigen Anspruchs 1. Vorteilhafte Weiterbildungen sind den Unteransprüchen zu entnehmen.

Gemäß einem ersten Aspekt der Erfindung wird eine Verkleidungsvorrichtung für eine Decke eines Innenraums eines Flugzeugs vorgeschlagen, die mindestens eine flächige Gewebebahn, mindestens eine Führungseinrichtung und mindestens ein Spannelement aufweist. Die Führungseinrichtung ist dabei dazu eingerichtet, in dem Innenraum entlang einer Erstreckungsrichtung des Innenraums befestigt zu werden und die Gewebebahn zumindest in einem ersten Abschnitt des Innenraums entlang der Erstreckungsrichtung verschiebbar zu führen. Das Spannelement wiederum ist dazu eingerichtet, in dem Innenraum befestigt zu werden und durch Aufbringen einer in Erstreckungsrichtung wirkenden Zugkraft auf die Vorderkante und/oder die Hinterkante der Gewebebahn die Gewebebahn entlang der Erstreckungsrichtung des Innenraums aufzuspannen.

Unter einer flächigen Gewebebahn sind im Sinne der Erfindung sämtliche flexiblen bzw. biegeschlaffen und im Wesentlichen zweidimensionalen Strukturen aus einem beliebigen geeigneten Material zu verstehen, die beispielsweise Planen, Stoffe, Matten, Folien, Leinen, Gittergewebe, Gitterplanen, Gitterfolien und dergleichen umfassen. Zum Eliminieren der Gefahr des Herabtropfens von Kondenswasser, welches zwischen der Gewebebahn und der Oberseite des Innenraums entstehen kann, könnte die Gewebebahn wasserdicht oder zumindest dazu befähigt sein, Kondenswasser in der Fläche der Gewebebahn zu verteilen, so dass es dort langsam verdunsten kann.

Das Spannelement ist derart innerhalb des Innenraums des Flugzeugs angeordnet, dass die Gewebebahn mit Hilfe des Spannelements innerhalb des Innenraums des Flugzeugs in einer Erstreckungsrichtung des Innenraums aufgespannt werden kann. Dazu könnte zum Aufnehmen eines ersten Endes der Gewebebahn ein Halterelement in dem Innenraum des Flugzeugs angeordnet werden, an dem das erste Ende der Gewebebahn gehaltert werden kann. An einem dem Halterelement entgegengesetzten zweiten Ende kann das Spannelement angeordnet werden, so dass die sich vom Halterelement zum Spannelement erstreckende Gewebebahn durch Aufbringen einer Zugkraft derart verspannen lässt, dass die Gewebebahn gestrafft in dem betreffenden Teil des Innenraums, etwa ein Deckenabschnitt zwischen zwei deckenhohen Monumenten, verläuft und diesen vollständig abdeckt.

Dies hat den technischen Effekt, dass eine wie eine Art "Deckensegel" aufgespannte Gewebebahn über einen relativ langen Abschnitt des Innenraums des Flugzeugs verlaufen kann, um dort eine Verkleidungsfunktion bereitzustellen. Es ist nicht erforderlich, eine größere zu verkleidende Fläche im Innenraum mit einzelnen Deckenpaneelen oder dergleichen zu versehen. Zum Ausgleich von Längenänderungen des Flugzeugs könnte die Gewebebahn elastisch ausgebildet sein, so dass sie auch im verspannten Zustand längsdehnbar und bei Verwindungen querdehnbar ist.

Bei der Unterteilung eines Innenraums eines Flugzeugs in mehrere Kabinenabschnitte kann beispielsweise die Decke jedes Kabinenabschnitts durch eine oder mehrere Gewebebahnen verkleidet werden. Das führt gleichermaßen dazu, dass eine flexible Handhabung und Öffnung der Deckenverkleidung zum Erreichen von im Deckenbereich angeordneten Systemen oder Einbauten, etwa im Wartungsfall, möglich ist. Es bietet sich dafür auch an, Verschlusseinrichtungen, wie etwa Reiß- oder Klettverschlüsse, an der Gewebebahn oder einem Ende der Gewebebahn für eine bedarfsweise Öffnung der Gewebebahn anzuordnen. Es wäre zusätzlich auch möglich, ein Ende der Gewebebahn als Verschlussfalz auszubilden, der ein strukturfestes Halterelement in einem Schließzustand überlappt. Diese Überlappung könnte durch einen Druckknopf, einen Schnallenverschluss, einen Reißverschluss, einen Klettverschluss oder andere Verschlussarten fixierbar sein.

Die Führungseinrichtung dient im Wesentlichen dazu, beispielsweise bei einer Erstreckung der Gewebebahn in einer Längsrichtung des Innenraums des Flugzeugs eine präzise Führung der Kanten der Gewebebahn zu erlauben, so dass sowohl die Montage vereinfacht wird, als auch bei Vibrationen, Beschleunigungen und Berührungen die Gewebebahn in ihrer vorgegebenen Position verbleibt.

Die Führungseinrichtungen können sämtliche Einrichtungen verwendet werden, die eine freie Bewegung der Gewebebahn entlang der Erstreckungsrichtung der Führungseinrichtungen erlauben. Als derartige Einrichtungen könnten etwa verschiebbare formschlüssige Verbindungen mit ineinandergreifende Körper- und Nut-Kombinationen, Schlittensysteme, Linearführungssysteme und dergleichen in Frage kommen. So wäre beispielsweise denkbar, als Führungseinrichtung eine Führungsschiene vorzusehen, die an einer Struktur oder an Einbauten innerhalb des Innenraums des Flugzeugs angeordnet sein könnte und einen zum Innenraum durch einen Schlitz geöffneten Hohlraum mit einem hinterschnittenen Profil aufweisen könnte, wobei die Führungsschiene an ihren Enden offen ist. Eine derartige Führungsschiene weist in vorteilhafter Weise einen Querschnitt auf, der das Einschieben und Verschieben eines korrespondierend geformten Führungskörpers in Längsrichtung erlaubt, eine Bewegung quer zur Schienenerstreckung jedoch verhindert. Ein derart geformter Führungskörper könnte an einer Seitenkante der Gewebebahn angeordnet sein, so dass sich die Gewebebahn ausgehend von dem Hohlraum der Führungsschiene durch den Schlitz in den Innenraum des Flugzeugs erstreckt. Werden zwei derartige Führungseinrichtungen parallel zueinander im Innenraum des Flugzeugs angeordnet, kann eine Gewebebahn, die an zwei einander gegenüberliegenden Kanten jeweils einen korrespondierend geformten Führungskörper aufweist, in die Führungsschienen eingeschoben werden, wodurch eine geführte Bewegung der Gewebebahn in der Erstreckungsrichtung der Führungsschienen bzw. des Innenraums realisiert wird.

Bevorzugt ist die Führungseinrichtung dazu eingerichtet, an mindestens einem Über-Kopf-Staufach befestigt zu werden. Dadurch kann eine Gewebebahn eine besonders vorteilhafte Deckenverkleidung des Innenraums realisieren.

Das Spannelement kann in Form von Schraubelementen, einem Ratschensystem, Schnallenelementen, Klemmensystem, motorgetriebenen Zugvorrichtungen oder auf andere Art realisiert werden. Das Spannelement kann sowohl an einem als auch an zwei Enden einer Gewebebahn angeordnet werden.

Gemäß einem weiteren Aspekt der Erfindung werden Versteifungselemente quer, längs, diagonal oder in einer dazwischen liegenden Richtung zum Unterstützen der aufgespannten Gewebebahn an der Verkleidungsvorrichtung angeordnet, um eine definierte räumlich gekrümmte, etwa kuppelartige, oder ebene Form der Gewebebahn herzustellen, um eine Querspannung zu erzeugen oder generell um eine Formstabilität der Gewebebahn zu erreichen.

Weiterhin ist denkbar, dass die Gewebebahn durch geeignete Materialeigenschaften selbständig in der Lage ist, im aufgespannten Zustand eine gewölbte Form einzunehmen und diese stabil aufrechtzuerhalten.

Zusätzlich hierzu ist die Integration von Beleuchtungselementen vor, an oder hinter der Gewebebahn möglich. Die leichte Austauschbarkeit sowie die Flexibilität in der Formgebung der Kombination aus Beleuchtungselementen und Gewebebahn ist besonders vorteilhaft. Leuchtmittel könnten auch direkt in die Gewebebahn durch Einweben oder andersartige Herstellvorgänge integriert werden.

Zusätzlich hierzu könnte die Gewebebahn transparent oder teiltransparent ausgeführt sein, so dass Licht, welches an einer zum Innenraum abgewandten Seite der Gewebebahn produziert wird, an vorgegebenen Stellen in den Innenraum des Flugzeugs austreten kann.

Weiterhin löst auch ein Verfahren zum Verkleiden eines Innenraums eines Flugzeugs die Aufgabe der Erfindung, welches die wesentlichen Verfahrensschritte des Einbringens einer flächigen Gewebebahn in den Innenraum, das Einführen der Gewebebahn in mindestens eine Führungseinrichtung, die dazu eingerichtet ist, die Gewebebahn zumindest in einem ersten Abschnitt des Innenraums entlang einer Erstreckungsrichtung verschiebbar zu führen, das Befestigen mindestens eines Spannelements in dem Innenraum und das Aufspannen der Gewebebahn an der Decke mit Hilfe des mindestens einen Spannelements in Erstreckungsrichtung aufweist.

Bevorzugt wird für jede Gewebebahn mindestens ein Halterelement in dem Innenraum des Flugzeugs an einem dem Spannelement entgegengesetzten Ende der Gewebebahn befestigt und anschließend die Gewebebahn an dem Halterelement befestigt, bevor das dem Halterelement entgegengesetzte Ende der Gewebebahn durch das Spannelement aufgespannt wird.

Schließlich löst auch ein Flugzeug mit mindestens einem Innenraum und mindestens einer erfindungsgemäßen Verkleidungsvorrichtung mit den vorangehend genannten Merkmalen die Aufgabe der Erfindung. Weist ein Flugzeug mehr als einen Kabinenabschnitt auf ist es besonders günstig, jeden Kabinenabschnitt mit einer separaten Verkleidungsvorrichtung zu versehen und dementsprechend mehrere Gewebebahnen in den Innenraum zu integrieren. Die Befestigung der Führungseinrichtungen an Über-Kopf-Staufächern zum Bereitstellen einer durchgängigen oder unterbrochenen Führung der Gewebebahnen ist für Deckenverkleidungen besonders günstig. Alternativ zur Befestigung separater Führungseinrichtungen ist auch denkbar, bereits bei der Herstellung von Über-Kopf-Staufächern Führungseinrichtungen vollständig durch eine entsprechende Formgebung der Gehäuse der Über-Kopf-Staufächer zu integrieren.

Der besondere Vorteil der erfindungsgemäßen Verkleidungsvorrichtung liegt nicht nur in der besonders einfachen Installation, sondern in dem geringen Gewicht und der Flexibilität hinsichtlich einer individuellen Gestaltung nach Kundenwunsch.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1a und 1b zeigen ein erstes Ausführungsbeispiel der erfindungsgemäßen Verkleidungsvorrichtung.
Fig. 2a-2c zeigen unterschiedliche Innenräume eines Flugzeugs mit der erfindungsgemäßen Vorrichtung.
In den Fig. 3a und 3b werden unterschiedliche Varianten von Führungseinrichtungen gezeigt.
Fig. 4a und 4b zeigen ein Ausführungsbeispiel der erfindungsgemäßen Verkleidungsvorrichtung mit unterschiedlichen Beleuchtungseinrichtungen.
Die Fig. 5a-5c zeigen weitere Abwandlungen der erfindungsgemäßen Verkleidungsvorrichtung.
Fig. 6a und 6b demonstrieren Versteifungselement zur Formgebung.
Fig. 7a-7d zeigen unterschiedliche Führungseinrichtungen.
Fig. 8 zeigt eine schematische Blockansicht des erfindungsgemäßen Verfahrens.
Fig. 9 zeigt ein Flugzeug mit mindestens einem Innenraum und mehreren in diesem Innenraum angeordneten erfindungsgemäßen Verkleidungsvorrichtungen.

### DETAILLIERTE DARSTELLUNG EXEMPLARISCHER AUSFÜHRUNGSFORMEN

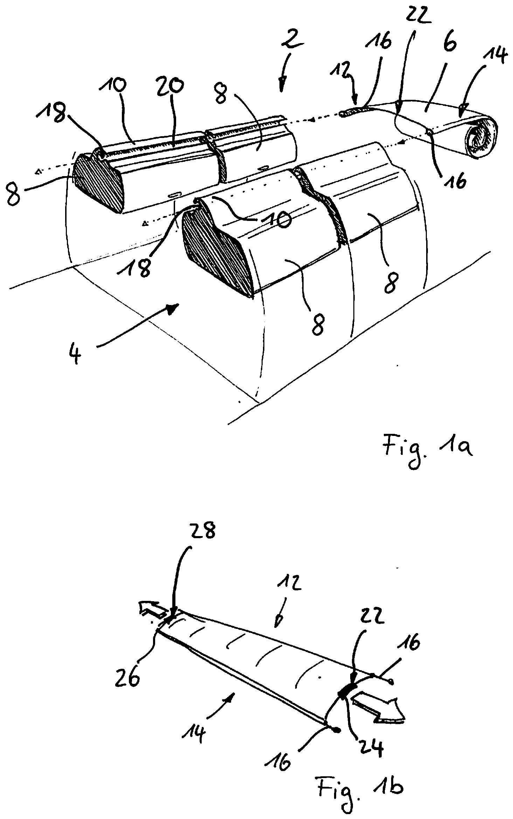

In Fig. 1a ist ein erstes Ausführungsbeispiel einer erfindungsgemäßen Verkleidungsvorrichtung 2 für einen Innenraum 4 eines Flugzeugs gezeigt. Eine flächige und in Fig. 1a exemplarisch biegeschlaff ausgeführte Gewebebahn wird kurz vor der Montage im Innenraum 4 in zusammengerolltem Zustand gezeigt, in dem die Gewebebahn 6 sehr leicht in den Innenraum 4 transportiert werden kann. Alternativ kann die Gewebebahn auch gefaltet oder, falls sie nicht biegeschlaff sein sollte, gebogen durch eine Zugangstür in den Innenraum 4 eingebracht werden. Im Innenraum 4 sind zahlreiche Über-Kopf-Staufächer 8 angeordnet, an denen beispielhaft jeweils eine Führungseinrichtung 10 angebracht ist. Dies muss nicht unbedingt bedeuten, dass die Führungseinrichtungen 10 separat von den Über-Kopf-Staufächern 8 hergestellt und dann daran montiert werden, die Führungseinrichtungen 10 könnten gleichermaßen auch direkt in das Gehäuse der Über-Kopf-Staufächer 8 integriert sein. Gleichermaßen könnte auch denkbar sein, nicht jedes Über-Kopf-Staufach 8 sondern nur einen Teil davon mit Führungseinrichtungen 10 auszustatten.

Die flächige Gewebebahn 6 weist im abgerollten Zustand, wie in Fig. 1b zu sehen ist, eine längliche Form auf, wobei an den Seitenkanten 12 und 14 Führungskörper 16 angeordnet sind, die derart gestaltet sind, dass sie in einem entsprechenden Hohlraum 18 der Führungseinrichtungen 10 geführt werden können. Die Hohlräume 18 weisen einen hinterschnittenen Profilquerschnitt auf, der mit einem Schlitz 20 zum Innenraum 4 hin geöffnet ist. Dadurch können die Führungskörper 16 zwar leicht in die Führungseinrichtungen 10 eingeschoben und darin verschoben werden, gleichzeitig wird aber auch die Bewegung in einer Richtung quer zu den Führungseinrichtungen 10 verhindert. Die Gewebebahn 6 ist derart bemessen, dass sie sich zwischen den Über-Kopf-Staufächern 8 entlang des Innenraums 4 des Flugzeugs erstrecken und dort aufgespannt werden kann.

Die Montage einer Gewebebahn 6 in einem Innenraum 4 eines Flugzeugs verläuft exemplarisch derart, dass die Gewebebahn 6 zusammengerollt in den Innenraum 4 des Flugzeugs eingebracht wird und dort mit einer Vorderkante 22 zuerst in Führungseinrichtungen 10 eingeschoben wird und vollständig durchgeschoben wird, dass die gesamte Gewebebahn 6 von den Führungseinrichtungen 10 aufgenommen ist.

In Fig. 1b wird eine abgerollte Gewebebahn 6 dargestellt, die zur Fixierung innerhalb des Innenraums 4 durch Spannelemente 24 und 26 an einer Vorderkante 22 und einer Hinterkante 28 verspannt werden kann. Es ist zum Sicherstellen einer Verspannung der Gewebebahn 4 nicht notwendig, zwei Spannelemente 24 und 26 zu verwenden, eines der beiden Spannelemente 24 und 26 kann auch durch ein beliebiges kraft- oder formschlüssig wirkendes Halterelement ersetzt werden, so dass lediglich von der Vorderkante 22 oder der Hinterkante 28 eine Spannkraft auf die Gewebebahn 6 aufgebracht werden muss.

Bevorzugt ist die Gewebebahn 6 aus einem elastischen Material hergestellt, so dass eine Längenvariabilität erreicht werden kann, so dass Längsbewegungen, Querverwindungen oder andere betriebsbedingte Formänderungen des Flugzeugrumpfs ausgeglichen werden können.

Die Spannelemente 24 und 26 sollten dazu eingerichtet sein, eine Zugkraft auf die Gewebebahn auszuüben und die Vorderkante 22 und/oder die Hinterkante 28 der Gewebebahn in einer solchen Position zu fixieren, dass eine Zugkraft aufrecht erhalten bleibt.

Die gezeigten Führungseinrichtungen sind lediglich als Beispiel zu verstehen. Es sind sämtliche Führungseinrichtungen denkbar, die eine sichere Führung der Gewebebahn 6 entlang einer zu verkleidenden Strecke sicherstellt. Neben der Kombination aus Führungsschienen 10 und Führungskörpern 16 können auch Halterelemente, die ein Verschieben in Längsrichtung und Halten in Querrichtung erlauben, eingesetzt werden. Derartige Halterelemente könnten in gleichmäßigen oder unterschiedlichen Abständen an den Seitenkanten 12 und 14 der Gewebebahn 6 angeordnet sein.

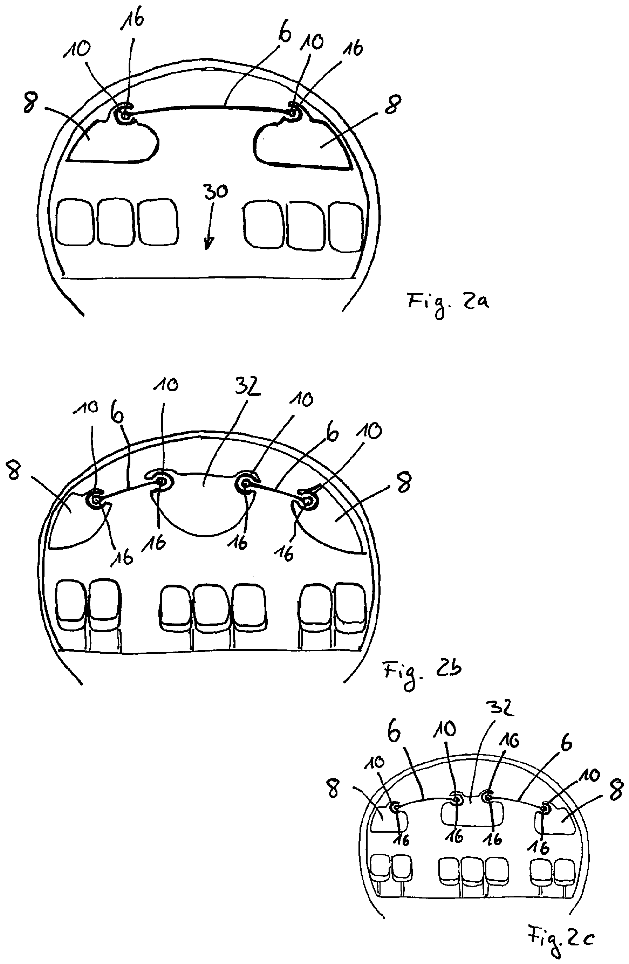

Die in Fig. 2a dargestellte Ausgestaltung des Innenraums 4 des Flugzeugs entspricht im Wesentlichen der in Fig. 1a gezeigten Darstellung und bildet ein Kurz- oder Mittelstreckenflugzeug mittelgroßer Bauart mit einem einzigen Mittelgang 30 und lediglich an zwei Seiten angeordneten Über-Kopf-Staufächern 8 ab. Selbstverständlich ist auch möglich, Flugzeugrümpfe mit einer größeren radialen Erstreckung und drei oder mehr Reihen von Über-Kopf-Staufächern 8 durch die erfindungsgemäße Verkleidungsvorrichtung auszurüsten. Es sei an dieser Stelle daraufhingewiesen, dass Die gezeigte Darstellungen der Gestaltungen der Innenräume 4 für die Erfindung nicht wesentlich sind. Kurz- und Mittelstreckenflugzeuge können auch zwei Gänge bei nur zwei Reihen Staufächern aufweisen. Weiterhin kann die Gewebebahn 6 auch ausschließlich an Strukturelementen fixiert werden, wenn in dem betreffenden Abschnitt des Innenraums 4 bereichsweise keine Staufächer installiert sind, etwa in einem Business Class-Abschnitt. Exemplarisch zeigt Fig. 2b den Rumpfquerschnitt eines größeren Mittel- oder Langstreckenflugzeugs, das zwei äußere Über-Kopf-Staufächer 8 und ein dazwischen liegendes mittleres Über-Kopf-Staufach 32 aufweist. Zwischen äußeren Über-Kopf-Staufächern 8 und dem mittleren Über-Kopf-Staufach 32 können jeweils Gewebebahnen 6 in Führungseinrichtungen 10 verlaufen. Jede der Gewebebahnen 6 weist ein eigenes Spannelement auf, die in der Darstellung aus Fig. 2b nicht detailliert ersichtlich sind.

In Fig. 2c wird die Integration der erfindungsgemäßen Verkleidungsvorrichtung in einem ähnlichen Rumpfquerschnitt wie in Fig. 2b, jedoch mit anderen Über-Kopf-Staufächern 8 und 32 gezeigt.

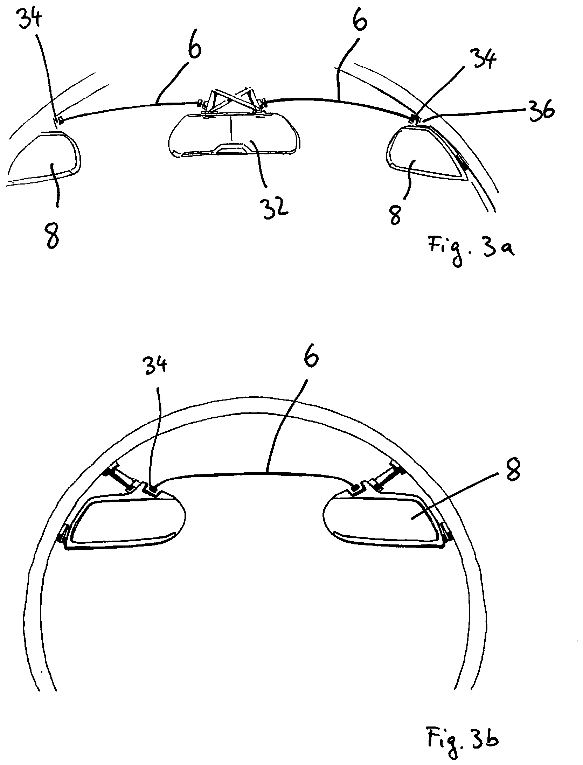

In den Fig. 3a und 3b werden abweichende Führungseinrichtungen 34 gezeigt, die nach Art von Laufschienen realisiert sind. Derartige Führungseinrichtungen 34 lassen sich nicht nur direkt in dem Gehäuse von Über-Kopf-Staufächern 8 wie in Fig. 3b anordnen, sondern wie in Fig. 3a auch an Strukturbereichen 36, die oberhalb der Über-Kopf-Staufächer 8 angeordnet oder dazu benachbart sein können.

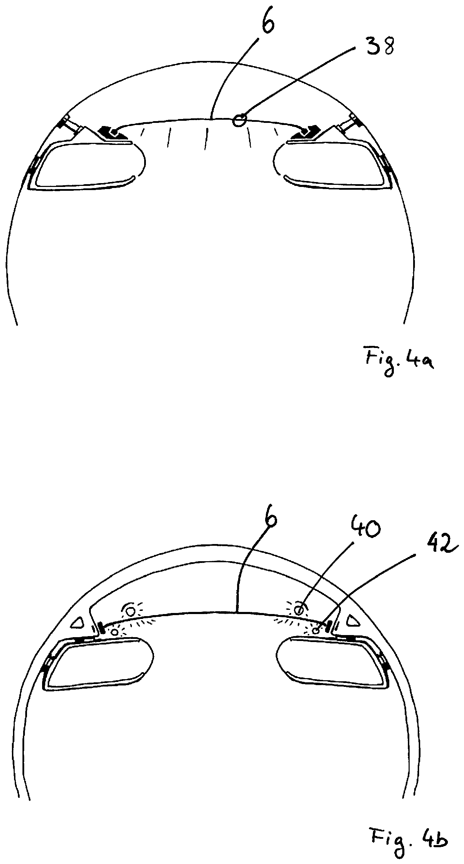

Die erfindungsgemäße Verkleidungsvorrichtung 2 kann durch geeignete Materialwahl bei der Gewebebahn 6 besonders dazu geeignet sein, Beleuchtungsfunktionen und Verkleidungsfunktionen miteinander zu kombinieren. In den Fig. 4a und 4b werden beispielhaft zwei unterschiedliche Beleuchtungsanwendungen dargestellt.

In Fig. 4a könnten etwa linienförmige Leuchtmittel 38 direkt, etwa durch Einweben, in die Gewebebahn 6 integriert sein, so dass die Gewebebahn 6 selbstleuchtende Eigenschaften aufweist. Gleichermaßen könnten gemäß Fig. 4b vom Innenraum 4 abgewandt Leuchtmittel 40 hinter der Gewebebahn 6 angeordnet sein, so dass Licht gleichmäßig durch eine transparente, teiltransparente oder lichtdurchlässige Gewebebahn 6 durchtreten kann. Bei entsprechender Farb- und Materialgestaltung der Gewebebahn 6 kann ein nicht blendendes und eine angenehme Leuchtfarbe aufweisendes Licht produziert werden.

Alternativ dazu sind Leuchtmittel 42 auf einer zum Innenraum 4 gewandten Seite der Gewebebahn 6 angeordnet, deren direkte Abstrahlung in den Innenraum 4 durch die vorgelagerten Über-Kopf-Staufächer 8 verhindert werden könnte. Dadurch wird ein ausreichend helles, indirektes und dadurch nicht blendendes Licht bereitgestellt, was durch eine entsprechende Materialwahl und/oder Farbgestaltung der Gewebebahn 6 optimiert werden könnte.

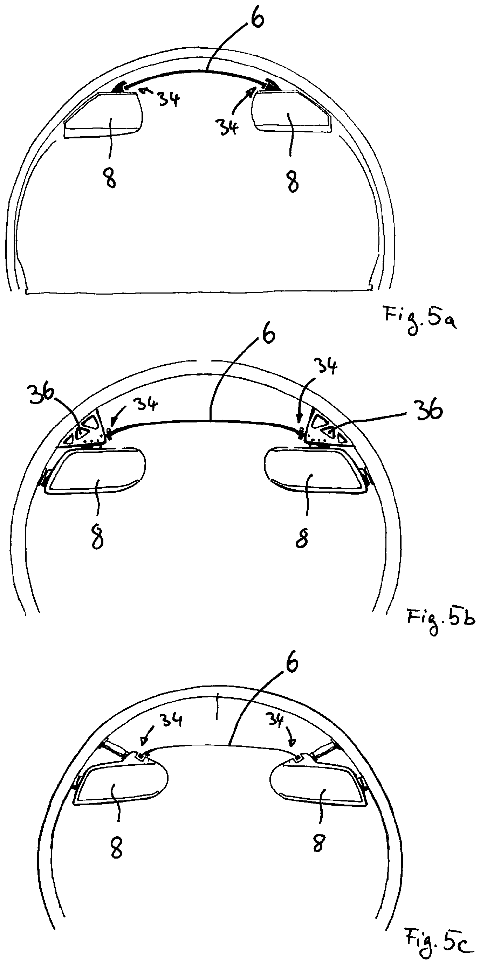

In den Fig. 5a, 5b und 5c werden exemplarische Befestigungsflächen für Führungseinrichtungen 34 gezeigt, die auch auf Führungseinrichtungen 10 aus Fig. 1a angewendet werden können. So zeigt Fig. 5a die aufgesetzte Anordnung einer Führungseinrichtung 34 auf einer Oberseite eines Über-Kopf-Staufachs 8. Fig. 5b zeigt die Befestigung der Führungseinrichtung 34 an einem Strukturabschnitt 36 und Fig. 5c demonstriert die Integration der Führungseinrichtung 34 in dem Gehäuse des Über-Kopf-Staufachs 8.

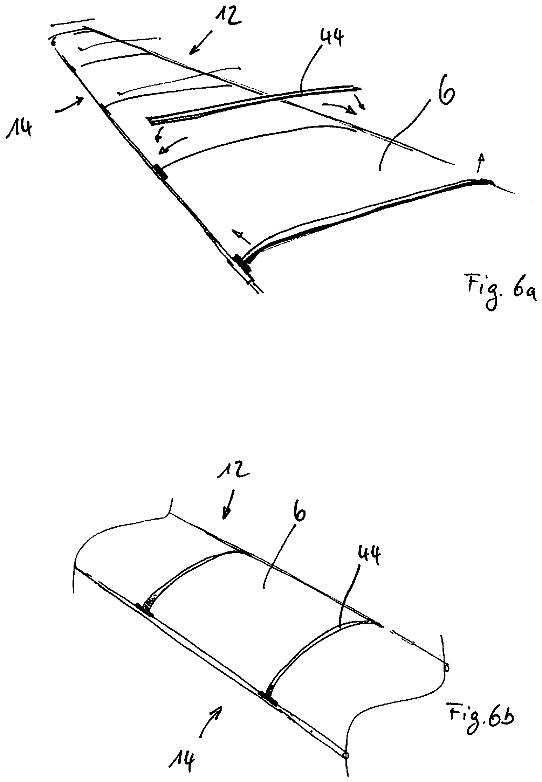

In den Fig. 6a und 6b werden zusätzliche Versteifungselemente 44 dargestellt, die dazu dienen könnten, der Gewebebahn 6 zu einer gewölbten Form zu verhelfen, die allein durch Spannen der Gewebebahn 6 nicht realisierbar wäre. Die Versteifungselemente 44 könnten elastisch sein und sich durch Einklemmen zwischen zwei gegenüberliegenden Führungseinrichtungen 10 bzw. 34 zu einer gekrümmten Form verbiegen, die durch die Längendifferenz zwischen einem unbelasteten Versteifungselement 44 und dem Abstand zwischen zwei gegenüber liegenden Führungseinrichtungen 10 und 34 gesteuert ist. Alternativ dazu könnten die Versteifungselemente 44 auch dazu dienen, eine ausreichende Querspannung zu erzeugen und/oder eine ebene Form der Gewebebahn zu unterstützen. Die Versteifungselemente 44 könnten in einer Art Tasche in das Material der Gewebebahn eingewebt, eingeklebt, eingesteckt oder auf andere Art befestigt werden.

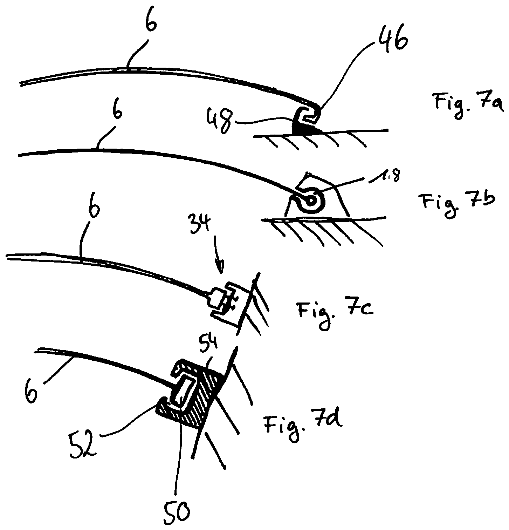

In den Fig. 7a-7d werden exemplarisch unterschiedliche Führungseinrichtungen dargestellt, die allerdings keinen Anspruch auf Vollständigkeit erheben. Sämtliche anderen Führungseinrichtungen, die ein Führen einer Gewebebahn 6 entlang einer Erstreckungsrichtung des Innenraums erlauben, können für die erfindungsgemäße Verkleidungsvorrichtung verwendet werden.

Fig. 7a zeigt eine Variante einer Führungseinrichtung, bei der zwei hakenförmige Kantenprofile 46 und 48 ineinandergreifen, wobei das hakenförmige Kantenprofil 46 an der Gewebebahn 6 angeordnet ist und das hakenförmige Kantenprofil 48 an einem festen Punkt in dem Innenraum 4 des Flugzeugs.

Das in Fig. 7b dargestellte Prinzip gleicht dem Prinzip aus beispielsweise Fig. 1a, bei dem ein Führungskörper 16 in einen Hohlraum 18 einer Führungsschiene 10 verläuft und der Führungskörper 16 mit der Gewebebahn 6 verbunden ist.

Die Fig. 7c stellt detailliert das in den Fig. 3a und 3b gezeigte Schienenprinzip der Führungseinrichtungen 34.

Schließlich zeigt Fig. 7d eine Abwandlung des Prinzips aus der Fig. 7b, bei der ein flacher, breiter Führungskörper 50 in einem korrespondierend geformten Hohlraum 52 einer Führungsschiene 54 verläuft, wobei der Führungskörper 50 mit der Gewebebahn 6 verbunden ist.

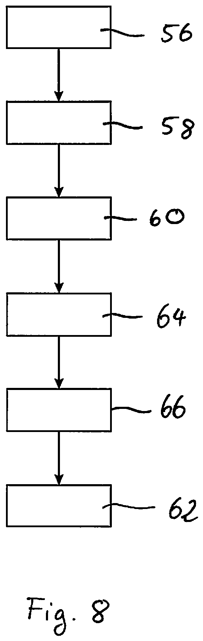

In Fig. 8 wird schematisch das erfindungsgemäße Verfahren präsentiert, das im Wesentlichen die folgenden Schritte aufweist. Nach dem Einbringen 56 einer flächigen Gewebebahn 6 in einen Innenraum 4 eines Flugzeugs wird die Gewebebahn 6 in mindestens eine Führungseinrichtung eingeschoben 58. Mindestens ein Spannelement wird in dem Innenraum 4 befestigt 60 und die Gewebebahn 6 wird mit Hilfe des mindestens einen Spannelements aufgespannt 62. Vor dem Befestigen des Spannelements kann auch ein Halterelement in dem Innenraum 4 befestigt werden 64, an dem ein Ende der Gewebebahn gehaltert werden 66 kann. Die Schritte können auch in einer abweichenden Reihenfolge durchgeführt werden.

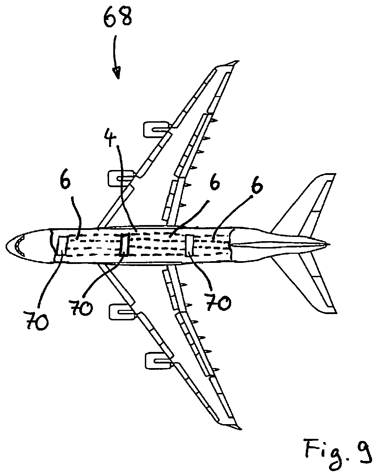

Schließlich zeigt Fig. 9 ein Flugzeug mit einem Innenraum 4, in dem beispielhaft Monumente 70 angeordnet sind, deren Zwischenräume Kabinenabschnitte bilden, die jeweils von zwei parallel zueinander verlaufenden erfindungsgemäßen Verkleidungsvorrichtungen mit jeweils einer Gewebebahn 6 an der Decke verkleidet werden. Besonders vorteilhaft sind die einzelnen Gewebebahnen 6 individuell verspannt, so dass die Deckenverkleidung jedes Kabinenabschnitts durch Lösen der betreffenden Gewebebahn 6 leicht zu öffnen ist, etwa um im Wartungsfall an Systeme im Deckenbereich zu gelangen.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN

- 2: erfindungsgemäße Verkleidungsvorrichtung
- 4: Innenraum
- 6: Gewebebahn
- 8: Über-Kopf-Staufach
- 10: Führungseinrichtung
- 12: Seitenkante
- 14: Seitenkante
- 16: Führungskörper
- 18: Hohlraum
- 20: Schlitz
- 22: Vorderkante
- 24: Spannelement
- 26: Spannelement oder Halterelement
- 28: Hinterkante
- 30: Mittelgang
- 32: Über-Kopf-Staufach
- 34: Führungseinrichtung
- 36: Strukturbereich
- 38: Leuchtmittel
- 40: Leuchtmittel
- 42: Leuchtmittel
- 44: Versteifungselement
- 46: hakenförmiges Kantenprofil
- 48: hakenförmiges Kantenprofil
- 50: Führungskörper
- 52: Hohlraum
- 54: Führungsschiene
- 56: Einbringen Gewebebahn
- 58: Einschieben Gewebebahn
- 60: Befestigen Spannelement
- 62: Aufspannen Gewebebahn
- 64: Befestigen Halterelement
- 66: Haltern Gewebebahn
- 68: Flugzeug
- 70: Monument

## Patentansprüche

1. Verkleidungsvorrichtung (2) für eine Decke eines Innenraums (4) eines Flugzeugs (68), aufweisend
- mindestens eine flächige Gewebebahn (6);
- mindestens eine Führungseinrichtung (10, 34, 54);
- mindestens ein Spannelement (24, 26);
wobei die Führungseinrichtung (10, 34, 54) dazu eingerichtet ist, in dem Innenraum (4) entlang einer Erstreckungsrichtung des Innenraums (4) befestigt zu werden und die Gewebebahn (6) zumindest in einem ersten Abschnitt des Innenraums (4) entlang der Erstreckungsrichtung verschiebbar zu führen; wobei das Spannelement (24, 26) dazu eingerichtet ist, in dem Innenraum (4) befestigt zu werden; **dadurch gekennzeichnet, dass** das Spannelement dazu eingerichtet ist, durch Aufbringen einer in Erstreckungsrichtung wirkenden Zugkraft auf die Vorderkante (22) und/oder die Hinterkante (28) der Gewebebahn (6) die Gewebebahn (6) entlang der Erstreckungsrichtung des Innenraums (4) aufzuspannen.

2. Verkleidungsvorrichtung (2) nach Anspruch 1, ferner aufweisend mindestens ein Halterelement (26), das dazu eingerichtet ist, in dem Innenraum (4) positioniert zu werden und die dem Spannelement (24, 26) gegenüberliegende Vorderkante (22) oder Hinterkante (28) der Gewebebahn (6) relativ zum Innenraum (4) fest zu haltern.

3. Verkleidungsvorrichtung (2) nach Anspruch 1 oder 2,
wobei die Gewebebahn (6) elastisch ausgebildet ist und dazu eingerichtet ist, im aufgespannten Zustand Längenänderungen und Querbewegungen des Innenraums (4) auszugleichen.

4. Verkleidungsvorrichtung (2) nach einem der vorhergehenden Ansprüche,
wobei die Führungseinrichtung (10, 34, 54) dazu eingerichtet ist, an mindestens einem Über-Kopf-Staufach (8, 32) befestigt zu werden.

5. Verkleidungsvorrichtung (2) nach einem der vorhergehenden Ansprüche,
wobei die Führungseinrichtung (10, 34, 54) als Führungsschiene ausgeführt ist.

6. Verkleidungsvorrichtung (2) nach einem der vorhergehenden Ansprüche, wobei das Spannelement (24, 26) aus eine Gruppe von Spannelementarten ausgewählt ist, die Gruppe bestehend aus
- Schraubelemente,
- Ratschensysteme,
- Schnallenelemente,
- Klemmensysteme und
- motorgetriebene Zugvorrichtungen.

7. Verkleidungsvorrichtung (2) nach einem der vorhergehenden Ansprüche, ferner aufweisend mindestens ein Versteifungselement (44), das dazu eingerichtet ist, die Form der aufgespannten Gewebebahn (6) zu stützen.

8. Verkleidungsvorrichtung (2) nach einem der vorhergehenden Ansprüche, ferner aufweisend mindestens eine Beleuchtungseinrichtung, die dazu eingerichtet ist, von der Gewebebahn (6) beabstandet angeordnet zu werden oder in die Gewebebahn (6) integriert zu werden.

9. Verkleidungsvorrichtung (2) nach Anspruch 8, wobei die Gewebebahn (6) zumindest bereichsweise transparent oder teiltransparent ist.

10. Verfahren zum Verkleiden einer Decke eines Innenraums (4) eines Flugzeugs (68), aufweisend die Schritte:
- Einbringen (56) einer flächigen Gewebebahn (6) in den Innenraum (4); und
- Einschieben (58) der Gewebebahn (6) in mindestens eine Führungseinrichtung (10, 34, 54), die dazu eingerichtet ist, die Gewebebahn (6) zumindest in einem ersten Abschnitt des Innenraums (4) entlang einer Erstreckungsrichtung verschiebbar zu führen; und
- Befestigen (60) mindestens eines Spannelements (24, 26) in dem Innenraum (4);
- **gekennzeichnet durch** das Aufspannen (62) der Gewebebahn (6) an der Decke mit Hilfe des mindestens einen Spannelements (24, 26) in Erstreckungsrichtung.

11. Verfahren nach Anspruch 10, ferner aufweisend die Schritte:
- Befestigen (64) eines Halterelements (26) in dem Innenraum (4) des Flugzeugs (68) an einem dem Spannelement (24) entgegengesetzten Ende der Gewebebahn (6); und
- Haltern (66) der Gewebebahn (6) an dem Halterelement (26), bevor das dem Halterelement (26) entgegengesetzte Ende der Gewebebahn (6) durch das Spannelement (24) aufgespannt wird.

12. Flugzeug (68) mit mindestens einem Innenraum (4) mit einer Decke und mindestens einer Verkleidungsvorrichtung (2) nach einem der Ansprüche 1 bis 9.

13. Flugzeug (68) nach Anspruch 12, wobei die Decke des Innenraums (4) mindestens in einen ersten Abschnitt und einen zweiten Abschnitt unterteilt ist und der erste Abschnitt und der zweite Abschnitt jeweils eine separate aufgespannte Gewebebahn (6) aufweisen.

## Claims

1. Covering device (2) for a ceiling of an interior space (4) of an aircraft (68), having
- at least one planar woven fabric web (6);
- at least one guiding installation (10, 34, 54);
- at least one tensioning element (24, 26);
wherein the guiding installation (10, 34, 54) is specified for being installed in the interior space (4) along a direction of extent of the interior space (4) and for guiding the woven fabric web (6) so as to be displaceable along the direction of extent in at least one first portion of the interior space (4);
wherein the tensioning element (24, 26) is specified for being fastened in the interior space (4), **characterized in that** the tensioning element by applying a tensile force that acts in the direction of extension on the front edge (22) and/or the rear edge (28) of the woven fabric web (6) is specified for erecting the woven fabric web (6) along the direction of extent of the interior space (4).

2. Covering device (2) according to Claim 1, furthermore having at least one mounting element (26) which is specified for being positioned in the interior space (4) and for mounting that front edge (22) or rear edge (28) of the woven fabric web (6) that lies opposite the tensioning element (24, 26) in a fixed manner relative to the interior space (4) .

3. Covering device (2) according to Claim 1 or 2, wherein the woven fabric web (6) is configured so as to be elastic and in the erected state is specified for equalizing length variations and transverse movements of the interior space (4).

4. Covering device (2) according to one of the preceding claims,
wherein the guiding installation (10, 34, 54) is specified for being fastened to at least one overhead locker (8, 32).

5. Covering device (2) according to one of the preceding claims,
wherein the guiding installation (10, 34, 54) is embodied as a guide rail.

6. Covering device (2) according to one of the preceding claims, wherein the tensioning element (24, 26) is selected from a group of types of tensioning elements, the group being composed of:
- screw elements;
- ratchet systems;
- buckle elements;
- clamp systems; and
- motor-driven traction devices.

7. Covering device (2) according to one of the preceding claims, furthermore having at least one reinforcement element (44) which is specified for supporting the shape of the erected woven fabric web (6) .

8. Covering device (2) according to one of the preceding claims, furthermore having at least one illumination installation which is specified for being disposed so as to be spaced apart from the woven fabric web (6), or for being integrated in the woven fabric web (6).

9. Covering device (2) according to Claim 8, wherein the woven fabric web (6) at least in portions is transparent or partially transparent.

10. Method for covering a ceiling of an interior space (4) of an aircraft (68), comprising the following steps:
- incorporating (56) a planar woven fabric web (6) into the interior space (4); and
- sliding (58) the woven fabric web (6) into at least one guiding installation (10, 34, 54) which is specified for guiding the woven fabric web (6) so as to be displaceable along a direction of extent in at least one portion of the interior space (4); and
- fastening (60) at least one tensioning element (24, 26) in the interior space (4);
- **characterized by** erecting (62) the woven fabric web (6) in the direction of extent on the ceiling with the aid of the at least one tensioning element (24, 26).

11. Method according to Claim 10, furthermore comprising the steps:
- fastening (64) a mounting element (26) in the interior space (4) of the aircraft (68) at an end of the woven fabric web (6) that is opposite the tensioning element (24); and
- mounting (66) the woven fabric web (6) on the mounting element (26) before that end of the woven fabric web (6) that is opposite the mounting element (26) is erected by the tensioning element (24) .

12. Aircraft (68) having at least one interior space (4) having a ceiling and at least one covering device (2) according to one of Claims 1 to 9.

13. Aircraft (68) according to Claim 12, wherein the ceiling of the interior space (4) is subdivided into at least one first portion and one second portion, and the first portion and the second portion have in each case one separate erected woven fabric web (6) .

## Revendications

1. Dispositif d'habillage (2) pour un plafond d'un habitacle (4) d'un avion (68), présentant :
- au moins une bande de tissu plane (6) ;
- au moins un dispositif de guidage (10, 34, 54);
- au moins un élément de tensionnement (24, 26) ; le dispositif de guidage (10, 34, 54) étant prévu pour être fixé dans l'habitacle (4) le long d'une direction d'étendue de l'habitacle (4) et pour guider la bande de tissu (6) au moins dans une première partie de l'habitacle (4) de manière déplaçable le long de la direction d'étendue ;
l'élément de tensionnement (24, 26) étant prévu pour être fixé dans l'habitacle (4) ;
**caractérisé en ce que** l'élément de tensionnement est prévu pour tendre la bande de tissu (6) le long de la direction d'étendue de l'habitacle (4), par application d'une force de traction agissant dans la direction d'étendue sur l'arête avant (22) et/ou l'arête arrière (28) de la bande de tissu (6) .

2. Dispositif d'habillage (2) selon la revendication 1, présentant en outre au moins un élément de retenue (26) qui est prévu pour être positionné dans l'habitacle (4) et pour retenir fixement par rapport à l'habitacle (4) l'arête avant (22) ou l'arête arrière (28) de la bande de tissu (6), opposée à l'élément de tensionnement (24, 26).

3. Dispositif d'habillage (2) selon la revendication 1 ou 2, dans lequel la bande de tissu (6) est réalisée sous forme élastique et est prévue, dans l'état tendu, pour compenser des variations de longueur et des mouvements transversaux de l'habitacle (4) .

4. Dispositif d'habillage (2) selon l'une quelconque des revendications précédentes,
dans lequel le dispositif de guidage (10, 34, 54) est prévu pour être fixé au niveau d'au moins un compartiment de rangement au-dessus de la tête (8, 32) .

5. Dispositif d'habillage (2) selon l'une quelconque des revendications précédentes,
dans lequel le dispositif de guidage (10, 34, 54) est réalisé sous forme de rail de guidage.

6. Dispositif d'habillage (2) selon l'une quelconque des revendications précédentes, dans lequel l'élément de tensionnement (24, 26) est choisi parmi un groupe de types d'élément de tensionnement, le groupe étant constitué
- d'éléments de vis,
- de systèmes de cliquets,
- d'éléments de colliers de tensionnement,
- de systèmes de tensionnement et
- de dispositifs de traction à moteur.

7. Dispositif d'habillage (2) selon l'une quelconque des revendications précédentes, présentant en outre au moins un élément de renforcement (44) qui est prévu pour supporter la forme de la bande de tissu tendue (6).

8. Dispositif d'habillage (2) selon l'une quelconque des revendications précédentes, présentant en outre au moins un dispositif d'éclairage qui est prévu pour être disposé à distance de la bande de tissu (6) ou pour être intégré dans la bande de tissu (6).

9. Dispositif d'habillage (2) selon la revendication 8, dans lequel la bande de tissu (6) est au moins en partie transparente ou partiellement transparente.

10. Procédé d'habillage d'un plafond d'un habitacle (4) d'un avion (68), présentant les étapes suivantes :
- introduction (56) de la bande de tissu plane (6) dans l'habitacle (4) ; et
- insertion (58) de la bande de tissu (6) dans au moins un dispositif de guidage (10, 34, 54) qui est prévu pour guider la bande de tissu (6) au moins dans une première partie de l'habitacle (4) de manière déplaçable le long d'une direction d'étendue ; et
- fixation (60) d'au moins un élément de tensionnement (24, 26) dans l'habitacle (4) ;
- **caractérisé par** le fait de tendre (62) la bande de tissu (6) au plafond dans la direction d'étendue à l'aide de l'au moins un élément de tensionnement (24, 26).

11. Procédé selon la revendication 10, présentant en outre les étapes suivantes :
- fixation (64) d'un élément de retenue (26) dans l'habitacle (4) de l'avion (68) au niveau d'une extrémité de la bande de tissu (6) opposée à l'élément de tensionnement (24) ; et
- retenue (66) de la bande de tissu (6) sur l'élément de retenue (26) avant que l'extrémité de la bande de tissu (6) opposée à l'élément de retenue (26) ne soit tendue par l'élément de tensionnement (24).

12. Avion (68) comprenant au moins un habitacle (4) avec un plafond et au moins un dispositif d'habillage (2) selon l'une quelconque des revendications 1 à 9.

13. Avion (68) selon la revendication 12, dans lequel le plafond de l'habitacle (4) est divisé au moins en une première partie et une deuxième partie et la première partie et la deuxième partie présentent à chaque fois une bande de tissu (6) tendue séparée.
